# EUROPÄISCHE PATENTSCHRIFT

(11) **EP 1 798 459 B1**
(45) Veröffentlichungstag und Bekanntmachung des Hinweises auf die Patenterteilung: **01.07.2009**
(21) Anmeldenummer: 06024741.8
(22) Anmeldetag: 29.11.2006
(51) Int. Cl.: F16L 21/06

(54) **Rohrverbindungsvorrichtung aus zwei halbschalenartigen Halteelementen**
Pipe connecting device with two half-shell-like retaining elements
Dispositif de raccord de tuyaux en deux demi-colliers de retenue

(30) Priorität: 15.12.2005 DE 202005019635 U
(43) Veröffentlichungstag der Anmeldung: 20.06.2007
(73) Patentinhaber: Poloplast GmbH & Co. KG, 4060 Leonding (AT)
(72) Erfinder: Paier, Thomas, 3352 St. Peter in der Au (AT)
(74) Vertreter: Weber, Joachim

(56) Entgegenhaltungen:
- DE-A1- 10 006 029
- US-A- 4 471 979
- US-A1- 2005 253 380

## Beschreibung

Die Erfindung bezieht sich auf eine Rohrverbindungsvorrichtung gemäß dem Oberbegriff des Hauptanspruchs.

Im Einzelnen bezieht sich die Erfindung auf eine Rohrverbindungsvorrichtung, mittels derer Kunststoffrohre verbunden und aneinander fixiert werden, die über eine Steckmuffe verbunden sind. Dabei wird ein Rohrende (Spitzende) in eine Rohrmuffe eingeschoben. Die Abdichtung erfolgt mittels zumindest eines Dichtrings. Eine axiale Fixierung ist durch derartige bekannte Konstruktionen jedoch nicht oder nur in geringerem Maße gegeben.

Insbesondere bei Kunststoffabflussrohren ist es somit erforderlich, diese nachträglich gegen unbeabsichtigtes Auseinanderziehen in axialer Richtung zu sichern.

Der Stand der Technik zeigt bei Druckwasserrohren Lösungen, bei welchen metallische Krallen oder Klammern aufgesetzt werden. Diese Lösungen erfordern jedoch einen relativ großen Platzbedarf und weiterhin sind die Konstruktionen so ausgebildet, dass sie Rohre mit großen Wandstärken voraussetzen.

Demgegenüber sind Kunststoffabflussrohre, insbesondere für den Hausabflussbereich, dünnwandig ausgestaltet und werden üblicherweise unter sehr beengten Platzverhältnissen installiert. Die Verwendung der vorbekannten Rohrverbindungsvorrichtung für diesen Anwendungszweck scheidet somit aus.

Die US 2005/253380 A1 beschreibt eine Rohrverbindungsvorrichtung zur formschlüssigen Verbindung zweier Rohrenden mit zwei halbschalenartigen Halteelementen, welche einen im Wesentlichen U-förmigen Querschnitt aufweisen. In dem U-förmigen Querschnitt ist ein Dichtungsring eingelegt, die beiden Flanken des U-förmigen Querschnitts sind mit vorspringenden verzahnten Bereichen versehen, die in die Oberfläche der Rohre eindrückbar sind.

Die US 4,471,979 A zeigt eine Rohrverbindungsvorrichtung mit zwei halbschalenartigen Halteelementen, welche einen mittigen Dichtungsring umschließen und formschlüssig mit den Rohrenden verankerbar sind.

Aus der DE 100 06 029 A1 ist eine Rohrverbindungsvorrichtung mit einem axial erweiterbaren Haltering vorbekannt, welche ebenfalls ein mittiges Dichtungsprofil umfasst und mit Messerringen versehen ist, welche zackenartige Vorsprünge umfassen.

Der Erfindung liegt die Aufgabe zugrunde, eine Rohrverbindungsvorrichtung der eingangs genannten Art zu schaffen, welche bei einfachem Aufbau, einfacher Montage und wirtschaftlicher Herstellbarkeit für dünnwandige Rohre einsetzbar ist und einen nur geringen Platzbedarf benötigt.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Rohrverbindungsvorrichtung zwei Halteelemente aus Kunststoff umfasst, welche so gestaltet sind, dass sie zumindest über eine teilzylindrische Auflagefläche gegen die Außenfläche des Spitzendes anlegbar sind. Zumindest eines der Halteelemente weist dabei zumindest ein radial nach innen ragendes Krallelement auf, welches über die Auflagefläche vorsteht und welches beim Spannen der Rohrverbindungsvorrichtung in die Oberfläche des Spitzendes des Kunststoffrohrs eingedrückt wird.

Durch die jeweils teilzylindrische Auflagefläche wird sichergestellt, dass das dünnwandige Kunststoffrohr nicht beschädigt wird. Durch das Krallelement ist es jedoch möglich, die Rohrverbindungsvorrichtung so formschlüssig mit dem Spitzende des Kunststoffrohrs zu verbinden bzw. an diesem zu verankern, dass ein unbeabsichtigtes Lösen der Verbindung der beiden Kunststoffrohre verhindert wird.

Die Gestaltung des Krallelements kann erfindungsgemäß so ausgebildet sein, dass dieses an die Wanddicke des Kunststoffrohrs und an dessen Aufbau (beispielsweise bei Mehrschichtrohren) in optimaler Weise angepasst werden kann.

Die beiden erfindungsgemäß vorgesehenen Halteelemente sind einfach und kostengünstig aus Kunststoff herstellbar. Sie können so dimensioniert werden, dass lediglich ein geringer Raumbedarf besteht, so dass die Rohrverbindungsvorrichtung auch in sehr beengten Raumverhältnissen montierbar ist.

Die beiden halbschalenförmigen Halteelemente sind bevorzugter Weise an ihren Endbereichen mittels einer Schnappverbindung, mittels einer Gelenkverbindung oder mittels eines flexiblen Elements verbunden bzw. verbindbar. Bei Verwendung des flexiblen Elements ist es auch möglich, die beiden Halteelemente einstückig aus Kunststoff herzustellen und das flexible Element als Verbindungssteg auszuführen.

Die beiden freien Enden der Halteelemente können erfindungsgemäß mittels einer Schraube gegeneinander verspannt werden. Es ist jedoch auch möglich, einen Hebelmechanismus oder einen sonstigen Spannmechanismus vorzusehen. Auch hierbei eröffnet sich die Möglichkeit, eine platzsparende und einfach herstellbare Ausgestaltung vorzusehen.

Erfindungsgemäß ist es somit möglich, die Rohrverbindungsvorrichtung an bereits montierten Rohrleitungen auf einfache und leichte Weise anzubringen.

Der rückseitige Anschlag der beiden Halteelemente umfasst zumindest einen Teilbereich der Steckmuffe. Da diese üblicherweise mit einem verdickten, flanschartigen oder ringartigen Bereich versehen ist, in welchen die Dichtung eingelegt ist, ergibt sich hierdurch die Möglichkeit, die Steckmuffe formschlüssig zu umgreifen. Ein Verkrallen des Halteelements mit der Steckmuffe ist somit nicht erforderlich.

Erfindungsgemäß ist vorgesehen, dass das Krallelement in einer axialen Schnittebene einen im Wesentlichen keilförmigen Querschnitt aufweist. Durch dieses Merkmal der Erfindung ist es möglich, den Haltewinkel entsprechend zu dimensionieren und ein sicheres Verkrallen mit der Oberfläche des Rohrs zu gewährleisten.

Weiterhin ist das Krallelement mit zumindest einer Schneide versehen ist. Diese kann in Form einer scharfen Kante ausgebildet sein, beispielsweise durch eine entsprechende Formtrennung einer Form eines Spritzgusswerkzeuges.

Das Krallelement ist einstückig mit dem Halteelement verbunden. Es ist jedoch auch möglich, dieses aus einem anderen Kunststoffmaterial zu fertigen und/oder mittels eines Zwei-Komponenten-Spritzverfahrens herzustellen.

Erfindungsgemäß ist es besonders günstig, wenn sich ein Haltewinkel des Krallelements von > 90° ergibt.

Der Werkstoff für die Halteelemente kann in einfacher Weise an den Werkstoff der Rohre angepasst werden, so dass sich günstige Werkstoffpaarungen ergeben. Für Polyolefinrohre (PP, PB, PE) eignen sich beispielsweise Polyamid-Typen mit einem hohen Glasfasergehalt. In günstiger Weise ist ein Sekantenmodul bzw. E-Modul > 10 · Rohrwerkstoff vorgesehen.

In einer Weiterbildung der Erfindung kann es günstig sein, eine zusätzliche Verdrehsicherung in Umfangsrichtung vorzusehen. Hierdurch wird eine unbeabsichtigte Verdrehung der Verbindungsvorrichtung verhindert, beispielsweise beim Verspannen der beiden Halteelemente mittels einer Schraube. Die zusätzliche Verdrehsicherung kann beispielsweise durch zusätzliche Krallelemente, welche in Umfangsrichtung wirken, realisiert werden. Die Krallelemente weisen somit Schneiden auf, die achsparallel angeordnet sind.

Erfindungsgemäß sind an den Halteelementen mehrere Krallelemente nebeneinander (um den Umfang verteilt) vorgesehen, die bevorzugterweise zueinander einen Abstand aufweisen. Es ist jedoch auch möglich, in Axialrichtung hintereinander mehrere Krallelemente auszubilden.

In einer Weiterbildung der Erfindung ist vorgesehen, dass die Rohrverbindungsvorrichtung zusätzlich als Rohrschelle dienen kann. Hierzu können zusätzliche Laschen bzw. Sockel oder sonstige Befestigungselemente vorgesehen sein.

Im Folgenden wird die Erfindung anhand eines Ausführungsbeispiels in Verbindung mit der Zeichnung beschrieben. Dabei zeigt:
- Fig. 1: eine perspektivische Darstellung des Verbindungsbereichs zweier Rohre unter Verwendung eines Ausführungsbeispiels der erfindungsgemäßen Rohrverbindungsvorrichtung,
- Fig. 2: eine schematische Seitenansicht der in Fig. 1 gezeigten Rohrverbindungsvorrichtung,
- Fig. 3: eine perspektivische Teil-Ansicht eines erfindungsgemäßen Halteelements,
- Fig. 4: eine vergrößerte Darstellung der Einzelheit E von Fig. 3,
- Fig. 5: eine vergrößerte Teil-Ansicht eines Krallelements, eingesetzt in ein Kunststoffrohr, und
- Fig. 6: eine Variante der in Fig. 5 gezeigten Ausgestaltungsform.

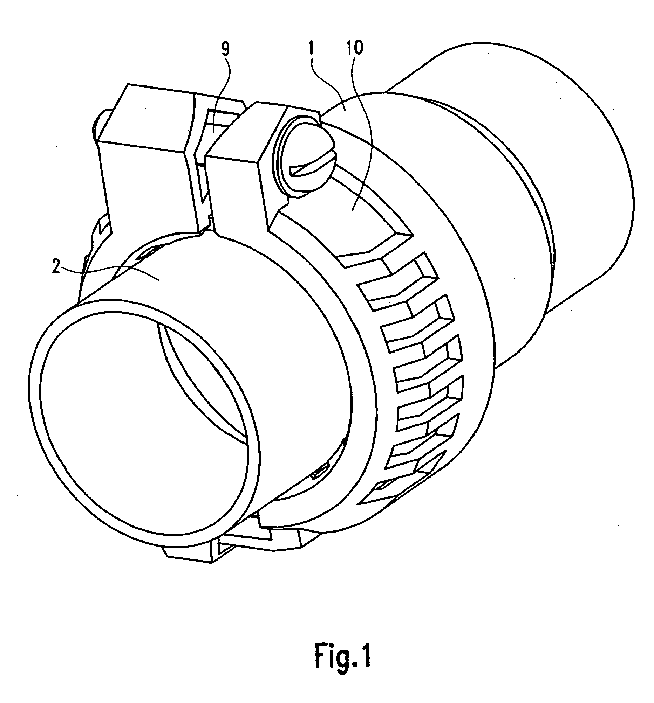

Die Fig. 1 zeigt ein Kunststoffrohr mit einer Steckmuffe 1, in welche ein weiteres Kunststoffrohr eingesteckt ist, welches ein Spitzende 2 umfasst. Die Steckmuffe 1 umfasst eine Sicke 10, welche ringwulstartig über den Umfang der Steckmuffe 1 vorsteht.

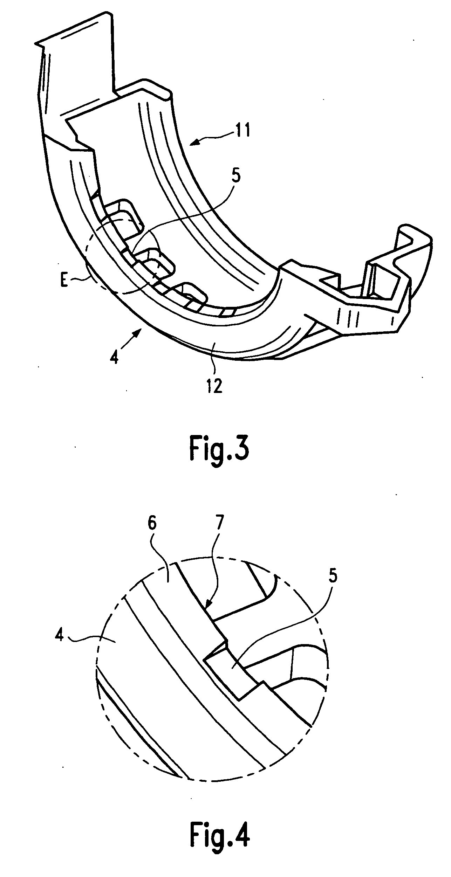

Die erfindungsgemäße Rohrverbindungsvorrichtung umfasst zwei halbschalenförmige Halteelemente 3, 4. Diese weisen, wie aus Fig. 3 ersichtlich ist, einen im Wesentlichen U-förmigen Querschnitt auf. Eine Rückwand 11 dient zur Anlage gegen die Sicke 10 der Steckmuffe 1. An der gegenüberliegenden Wandung 12 ist eine Auflagefläche 5 ausgebildet, welche teilzylindrisch ausgestaltet ist und gegen die Außenfläche des Spitzendes 2 anliegt, wenn die beiden Halteelemente 3, 4 gegeneinander verspannt sind.

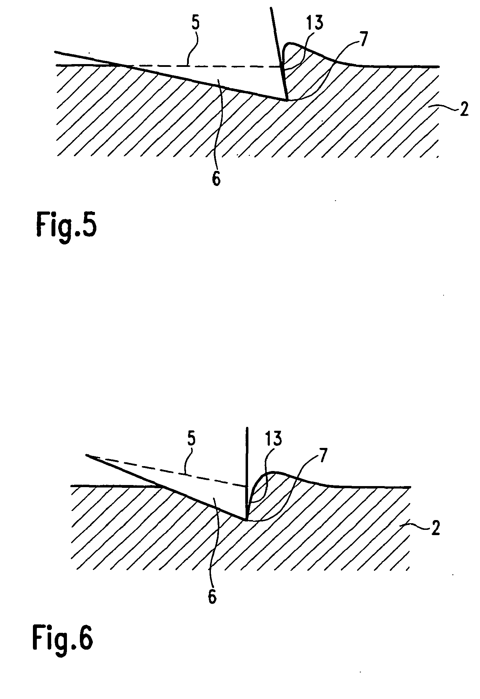

Von der Auflagefläche 5 stehen mehrere, am Umfang verteilte zueinander beabstandete Krallelemente 6 vor, die jeweils eine Schneide 7 aufweisen. Die Krallelemente 6 mit den Schneiden 7 sind somit in die Oberfläche des Spitzendes 2 des Kunststoffrohres eingepresst, wenn die Rohrverbindungsvorrichtung montiert ist, so wie sich dies aus den Darstellungen der Fig. 5 und 6 ergibt.

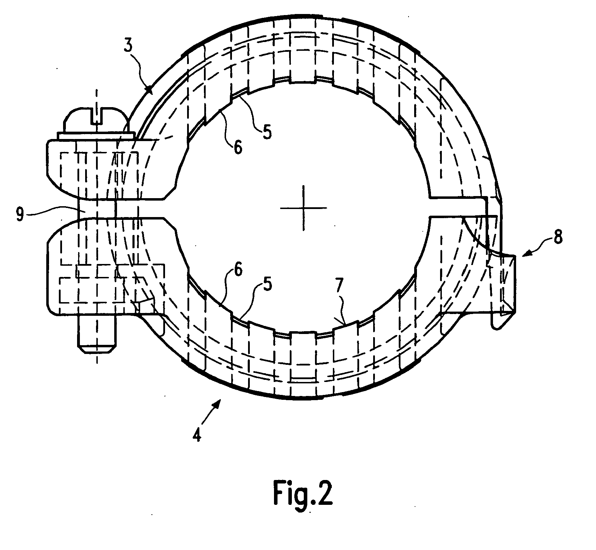

Die beiden Halteelemente 3, 4 sind mittels einer Schnappverbindung 8 verbunden (siehe Fig. 2). Hierdurch ergibt sich eine einfache Montage. Es ist jedoch auch möglich, anstelle der Schnappverbindung 8 ein Gelenk oder ähnliches vorzusehen.

Die beiden freien Enden der Halteelemente 3, 4 sind mittels einer Schraube gegeneinander verspannt.

Die Fig. 5 und 6 zeigten jeweils unterschiedliche Krallelemente 6 in der Seitenansicht bzw. im Schnitt und deren Eindringen in den Kunststoff. Es ergibt sich, dass die Krallelemente keilförmig ausgebildet sind und hierdurch jeweils einen Haltewinkel 13 definieren. Die Haltewinkel 13 können unterschiedlich dimensioniert sein. Ein spitzer Winkel des Krallelements 6, wie in Fig. 5 gezeigt, ist hierbei zum sicheren Verkrallen günstiger, als ein Haltewinkel 13 von 90°, so wie dies in Fig. 6 dargestellt ist.

Durch die schräge Auflagefläche 5 ergibt sich bei der Montage eine leichte Verdrehung oder Verkippung des Krallelements 6 und damit ein optimierter Halt. Die Fig. 5 zeigt den verbesserten Halt durch den Haltewinkel 13 größer 90°. In Fig. 6 ist das verbesserte Eindringen dargestellt.

### Bezugszeichenliste

- 1: Steckmuffe
- 2: Spitzende
- 3: Halteelement
- 4: Halteelement
- 5: Auflagefläche
- 6: Krallelement
- 7: Schneide
- 8: Schnappverbindung
- 9: Schraube
- 10: Sicke
- 11: Rückwand
- 12: Wandung
- 13: Haltewinkel

## Patentansprüche

1. Rohrverbindungsvorrichtung zur formschlüssigen Verbindung zweier Kunststoffrohre, von denen eines eine Steckmuffe (1) und das andere ein in die Steckmuffe (1) eingestecktes Spitzende (2) umfasst, wobei die Rohrverbindungsvorrichtung zwei halbschalenartige Halteelemente (3, 4) umfasst, welche aus Kunststoff gefertigt sind und zumindest einen Teilbereich der Steckmuffe (1) und des Spitzendes (2) umgreifen können und gegeneinander verspannbar sind, wobei die Halteelemente (3, 4) jeweils einen im Wesentlichen U-förmigen Querschnitt aufweisen, wobei der U-förmige Querschnitt eine Rückwand (11) umfasst, welche zur axial sichernden Anlage gegen die Steckmuffe (1) ausgebildet ist, sowie eine der Rückwand (11) gegenüberliegende Wandung (12), an welcher eine teilzylindrische Auflagefläche (5) ausgebildet ist, welche gegen die Außenfläche des Spitzendes (2) anlegbar ist und am Umfang mehrere, radial nach innen ragende Krallelemente (6) aufweist, welche in einer axialen Schnittebene einen im Wesentlichen keilförmigen Querschnitt aufweisen und jeweils mit zumindest einer Schneide (7) versehen sind, wobei die Krallelemente (6) einstückig mit dem Halteelement (3, 4) verbunden sind.

2. Vorrichtung nach Anspruch 1, **dadurch gekennzeichnet, dass** das Krallelement (6) im Querschnitt an der Schneide (7) spitzwinklig ausgebildet ist.

3. Vorrichtung nachAnspruch 1 oder 2, **dadurch gekennzeichnet, dass** an dem Halteteil (3, 4) axial hintereinander mehrere Krallelemente (6) ausgebildet sind.

4. Vorrichtung nach einem der Ansprüche 1 bis 3, **dadurch gekennzeichnet, dass** an dem Halteelement (3, 4) zumindest ein in Umfangsrichtung wirkendes, im Wesentlichen achsparallel angeordnetes weiteres Krallelement vorgesehen ist.

5. Vorrichtung nach einem der Ansprüche 1 bis 4, **dadurch gekennzeichnet, dass** die Halteelemente (3, 4) an deren einem Ende mittels einer Schnappverbindung (8) miteinander verbunden sind.

6. Vorrichtung nach einem der Ansprüche 1 bis 4, **dadurch gekennzeichnet, dass** die Halteteile an deren einem Ende mittels eines Gelenks miteinander verbunden sind.

7. Vorrichtung nach einem der Ansprüche 1 bis 4, **dadurch gekennzeichnet, dass** die Halteteile (3, 4) an deren einem Ende mittels eines flexiblen Elements miteinander verbunden sind.

8. Vorrichtung nach einem der Ansprüche 1 bis 7, **dadurch gekennzeichnet, dass** die Halteteile (3, 4) an ihren freien Enden mittels einer Schraube gegeneinander verspannbar sind.

9. Vorrichtung nach einem der Ansprüche 1 bis 7, **dadurch gekennzeichnet, dass** die Halteteile (3, 4) an ihren freien Enden mittels eines Hebelmechanismus gegeneinander verspannbar sind.

10. Vorrichtung nach einem der Ansprüche 1 bis 7, **dadurch gekennzeichnet, dass** die Halteteile (3, 4) an ihren freien Enden mittels einer Spannvorrichtung gegeneinander verspannbar sind.

11. Vorrichtung nach einem der Ansprüche 1 bis 10, **dadurch gekennzeichnet, dass** an zumindest einem Halteteil (3, 4) ein Befestigungselement angeordnet ist.

## Claims

1. A pipe connecting device for a form-fit connection of two plastics pipes, one of which comprises a connecting sleeve (1) and the other one comprises a tip end (2) inserted into the connecting sleeve (1), wherein the pipe connecting device comprises two half-shell-type retaining elements (3, 4) which are made of plastics and which are adapted to encompass at least a partial portion of the connecting sleeve (1) and the tip end (2) and which can be tensed against each other, wherein the retaining elements (3, 4) respectively have a substantially U-shaped cross-section, wherein the U-shaped cross-section comprises a rear wall (11) which is formed for an axially securing abutment against the connecting sleeve (1) as well as a wall (12) opposite to the rear wall (11), at which wall a partially cylindrical supporting surface (5) is formed, which can be abutted against the outer surface of the tip end (2) and comprises a plurality of radially inwardly protruding claw members (6) at its periphery, which claw members have a substantially wedge-shaped cross-section in an axial cutting plane and are respectively provided with at least one cutting edge (7), wherein the claw members (6) are integrally connected to the retaining element (3, 4).

2. The device of claim 1, **characterized in that** the claw member (6) is formed acute-angled in cross-section at the cutting edge (7).

3. The device of claim 1 or 2, **characterized in that** a plurality of claw members (6) are formed axially in a row at the retaining element (3, 4).

4. The device of one of claims 1 to 3, **characterized in that** at least one further claw member is provided at the retaining element (3, 4), said member being effective in the circumferential direction and arranged substantially axially parallel.

5. The device of one of claims 1 to 4, **characterized in that** the retaining elements (3, 4) at one end thereof are mutually connected by means of a snap joint (8).

6. The device of one of claims 1 to 4, **characterized in that** the retaining elements at one end thereof are mutually connected by means of a hinge.

7. The device of one of claims 1 to 4, **characterized in that** the retaining elements at one end thereof are mutually connected by means of a flexible member.

8. The device of one of claims 1 to 7, **characterized in that** the retaining elements (3, 4) can be tensed against each other at their free ends by means of a screw.

9. The device of one of claims 1 to 7, **characterized in that** the retaining elements (3, 4) can be tensed against each other at their free ends by means of a lever mechanism.

10. The device of one of claims 1 to 7, **characterized in that** the retaining elements (3, 4) can be tensed against each other at their free ends by means of a tensioning device.

11. The device of one of claims 1 to 10, **characterized in that** a fixing member is arranged at at least one retaining element (3, 4).

## Revendications

1. Dispositif de raccordement de tuyaux pour le raccordement positif de deux tuyaux en matière synthétique, dont l'un comporte un manchon d'emboîtement (1) et l'autre une extrémité en pointe (2) emboîtée dans le manchon d'emboîtement (1), dans lequel le dispositif de raccord de tuyaux comporte deux éléments de retenue (3, 4) de type demi-coque qui sont fabriqués en matière synthétique et peuvent entourer au moins une zone partielle du manchon d'emboîtement (1) et de l'extrémité en pointe (2) et sont serrés l'un contre l'autre, dans lequel les éléments de retenue (3, 4) présentent chacun une section essentiellement en forme de U, dans lequel la section en forme de U comporte une paroi arrière (11) qui est réalisée pour l'appui à blocage axial contre le manchon d'emboîtement (1), ainsi qu'une paroi (12) opposée à la paroi arrière (11), sur laquelle est réalisée une surface d'appui (5) partiellement cylindrique qui peut être appliquée contre la surface extérieure de l'extrémité en pointe (2) et présente sur la périphérie plusieurs éléments à griffes (6) dépassant radialement vers l'intérieur, qui présentent dans un plan de coupe axial une section essentiellement en forme de coin et sont pourvus chacun d'au moins une lame (7), les éléments à griffes (6) étant reliés d'un seul tenant à l'élément de retenue (3, 4).

2. Dispositif selon la revendication 1, **caractérisé en ce que** l'élément à griffes (6) est réalisé en section au niveau de la lame (7) à angle aigu.

3. Dispositif selon la revendication 1 ou 2, **caractérisé en ce que** plusieurs éléments à griffes (6) sont réalisés axialement les uns derrière les autres sur l'élément de retenue (3, 4).

4. Dispositif selon l'une quelconque des revendications 1 à 3, **caractérisé en ce qu'**au moins un autre élément à griffes agissant dans le sens périphérique, disposé essentiellement de manière parallèle à l'axe est prévu sur l'élément de retenue (3, 4).

5. Dispositif selon l'une quelconque des revendications 1 à 4, **caractérisé en ce que** les éléments de retenue (3, 4) sont reliés entre eux au niveau d'une de leurs extrémités au moyen d'un assemblage à enclenchement (8).

6. Dispositif selon l'une quelconque des revendications 1 à 4, **caractérisé en ce que** les éléments de retenue sont reliés entre eux au niveau d'une de leurs extrémités au moyen d'une articulation.

7. Dispositif selon l'une quelconque des revendications 1 à 4, **caractérisé en ce que** les éléments de retenue (3, 4) sont reliés entre eux au niveau d'une de leurs extrémités au moyen d'un élément flexible.

8. Dispositif selon l'une quelconque des revendications 1 à 7, **caractérisé en ce que** les éléments de retenue (3, 4) peuvent être serrés l'un contre l'autre au niveau de leurs extrémités libres au moyen d'une vis.

9. Dispositif selon l'une quelconque des revendications 1 à 7, **caractérisé en ce que** les éléments de retenue (3, 4) peuvent être serrés l'un contre l'autre au niveau de leurs extrémités libres au moyen d'un mécanisme à levier.

10. Dispositif selon l'une quelconque des revendications 1 à 7, **caractérisé en ce que** les éléments de retenue (3, 4) peuvent être serrés l'un contre l'autre au niveau de leurs extrémités libres au moyen d'un dispositif de serrage.

11. Dispositif selon l'une quelconque des revendications 1 à 10, **caractérisé en ce qu'**un élément de fixation est disposé sur au moins un élément de retenue (3, 4).
